# EUROPEAN PATENT SPECIFICATION

(11) **EP 1 820 775 B1**
(45) Date of publication and mention of the grant of the patent: **30.12.2009**
(21) Application number: 07250576.1
(22) Date of filing: 13.02.2007
(51) Int. Cl.: C01B 3/06

(54) **Method for generation of hydrogen gas from borohydride**
Verfahren zur Erzeugung von Wasserstoffgas aus Borohydrid
Procédé de génération d'hydrogène à partir d'un hydrure de bore

(30) Priority: 16.02.2006 US 774258 P
(43) Date of publication of application: 22.08.2007
(73) Proprietor: Rohm and Haas Company, Philadelphia, PA 19106-2399 (US)
(72) Inventor: Yamamoto, John Hiroshi, Andover, Massachusetts 01810 (US)
(74) Representative: Kent, Venetia Katherine

(56) References cited:
- US-A1- 2005 238 573

## Description

This invention relates to a method for generation of hydrogen gas from a borohydride-containing formulation. This method is useful for hydrogen generation in fuel cells.

Borohydride-containing compositions are known as hydrogen sources for hydrogen fuel cells, usually in the form of aqueous solutions. Solid borohydride-containing compositions also have been used. For example, U.S. Pub. No. 2005/0238573 discloses the use of solid sodium borohydride, which is combined with aqueous acid to produce hydrogen. However, the problem of quickly stopping the generation of hydrogen is not adequately addressed by this reference.

The problem addressed by this invention is to find a method for generation of hydrogen gas from a borohydride-containing formulation that allows hydrogen generation to be stopped relatively rapidly.

### STATEMENT OF INVENTION

The present invention provides a method for generation of hydrogen comprising: (a) providing a solid composition comprising from 3% to 50% of at least one base; and 50% to 97% of at least one borohydride compound; and (b) adding to the solid composition an aqueous solution of at least one acid; said aqueous solution comprising from 0.01 to 2 equivalents of acid ; wherein the solid composition and the aqueous solution are substantially free of transition metals from groups 8, 9 and 10 and **characterised in that** the acid is malic acid.

### DETAILED DESCRIPTION

Percentages are weight percentages and temperatures are in °C, unless specified otherwise. An "organic acid" is malic acid. An "inorganic acid" is an acid which does not contain carbon. A "base" is a compound with a pKa>8 which is solid at 40°C.

In one embodiment, the amount of borohydride compound(s) in the solid composition is at least 75%, alternatively at least 85%, alternatively at least 86%, alternatively at least 87%; the amount of base(s) is no more than 25%, alternatively no more than 15%, alternatively no more than 14%, alternatively no more than 13%. In one embodiment of the invention, the amount of base in the solid composition is at least 5%; the amount of borohydride compound is no more than 95%. Preferably, the borohydride compound is a metal salt which has a metal cation from groups 1, 2, 4, 5, 7, 11, 12 or 13 of the periodic table, or a mixture thereof. In one embodiment, the borohydride compound is an alkali metal borohydride or mixture thereof; alternatively it comprises sodium borohydride (SBH) or potassium borohydride or a mixture thereof, alternatively sodium borohydride. Preferably, the base is an alkali metal hydroxide or mixture thereof, alkali metal alkoxide or alkaline earth alkoxide or combination thereof; alternatively it is an alkali metal hydroxide or sodium or potassium methoxide, or mixture thereof; alternatively sodium, lithium or potassium hydroxide or sodium or potassium methoxide, or a mixture thereof; alternatively sodium hydroxide or potassium hydroxide; alternatively sodium hydroxide. More than one alkali metal borohydride and more than one base may be present.

The acid is malic acid.

In one embodiment of the invention, the aqueous solution contains from 0.1 to 1 equivalents of acid. For this purpose, equivalents are measured as equivalents of hydrogen ion for reaction with borohydride. The aqueous solution also may contain small amounts of additives, e.g., anti-foaming agents, surfactants, etc. Preferably, the aqueous solution contains no more than 10% of anything other than water and acid, alternatively no more than 5%, alternatively no more than 1%.

The solid composition of this invention may be in any convenient form. Examples of suitable solid forms include powder, granules, and compressed solid material. Preferably, powders have an average particle size less than 80 mesh (177 µm). Preferably, granules have an average particle size from 10 mesh (2000 µm) to 40 mesh (425 µm). Compressed solid material may have a size and shape determined by the equipment comprising the hydrogen generation system. In one embodiment of the invention, compressed solid material is in the form of a typical caplet used in other fields. The compaction pressure used to form compressed solid material is not critical.

The solid composition is substantially free of substances that catalyze hydrolysis of borohydride, e.g., salts of transition metals in groups 8, 9 and 10; such as Co, Ru, Ni, Fe, Rh, Pd, Os, Ir, Pt, or mixtures thereof; and borides of Co and/or Ni.

Preferably, the water content of the solid composition is no more than 0.5%, alternatively no more than 0.2%, alternatively no more than 0.1%. Preferably, the solid composition contains less than 20% of anything other than the borohydride compound and the base, alternatively less than 15%, alternatively less than 10%, alternatively less than 5%. Other possible constituents of the solid composition include, e.g., catalysts, acids, anti-foam agents and surfactants.

Preferably, the temperature of the solid composition and the aqueous solution are in the range from -60°C to 100°C, alternatively from -40°C to 50°C. The rate of addition may vary depending on the desired rate of hydrogen generation. Preferably, the mixture formed when the solid composition contacts the aqueous solution is not agitated.

The method of this invention allows generation of hydrogen with the capability of stopping said generation relatively quickly after stopping the addition of the aqueous solution. This capability is important in hydrogen fuel cells, where power generation on demand is a key concern. Inability to stop the flow of hydrogen is detrimental to rapid on/off operation of the fuel cell. Linearity of hydrogen generation over time and/or the amount of aqueous solution added is also an important capability in a hydrogen fuel cell.

### EXAMPLES

### Example 1: Generation of Hydrogen Gas from SBH and Aqueous Malic Acid or CoCl₂

Mixtures of SBH and NaOH were prepared, as listed in Table 1 below. Approximately 0.5-0.7 grams of each mixture was compacted at 10,000 psi (68.9 kPa) and placed in a reactor that was connected to a reservoir of water. The water in the reservoir was displaced when hydrogen gas was evolved. A solution of 25 wt % malic acid was syringe pumped to the solid at a rate of 100 microliters per minute for ten minutes at which time the pumps were turned off and the amount of water that continued to be displaced was monitored and recorded as a measure of the amount of time (in seconds unless otherwise indicated) elapsed until the hydrogen flow stopped. For times less than 30 minutes, times for two runs are listed.

**Table 1**

| SBH Additive | Aqueous Solution | Time to Stop Flow |
|---|---|---|
| none | 25% malic acid | > 30 min. |
| 2% NaOH | 25% malic acid | > 30 min. |
| 5% NaOH | 25% malic acid | 627, 613 |
| 10% NaOH | 25% malic acid | 390, 399 |
| 13% NaOH | 25% malic acid | 108, 80 |
| 15% NaOH | 25% malic acid | 62, 65 |
| 20% NaOH | 25% malic acid | 40, 37 |
| 25% NaOH | 25% malic acid | 30, 25 |
| 50% NaOH | 25% malic acid | 5, 10 |
| none | 4.6% CoCl₂ | > 30 min. |
| 13% NaOH | 4.6% CoCl₂ | > 30 min. |
| 20% polyacrylic acid | 25% malic acid | > 30 min. |
| 20% polyacrylic acid | 4.6% CoCl₂ | > 30 min. |
| 20% IRP-64* | 25% malic acid | > 30 min. |
| 20% IRP-64* | 4.6% CoCl₂ | > 30 min. |
| 20% Angelic acid | 25% malic acid | > 30 min. |
| 20% Angelic acid | 4.6% CoCl₂ | > 30 min. |

| | | |
|---|---|---|
| * IRP-64 is a copolymer of methacrylic acid and divinylbenzene. | | |

### Example 2: Generation of H₂ vs. Time from SBH and Aqueous Malic Acid

Mixtures of SBH and NaOH were prepared, as listed in Table 2 below. Generation of hydrogen was performed as described in Example 1. Volume of hydrogen gas evolved was noted at regular time intervals (in minutes) and correlated with time to determine linearity. The correlation coefficients, R², obtained from data from 1 minute to 20 minutes, also are listed for each material.

**Table 2**

| | 5% NaOH | 15% NaOH | 10% NaOH | 2% NaOH | 13% NaOH | 100% SBH |
|---|---|---|---|---|---|---|
| 1 min. | 0 | 40 | 39 | 56 | 57 | 0.4 |
| 2 min. | 0 | 78 | 88 | 110 | 120 | 0 |
| 3 min. | 0 | 132 | 144 | 184 | 181 | 0 |
| 4 min. | 47 | 188 | 196 | 246 | 239 | 0 |
| 5 min. | 112 | 243 | 246 | 310 | 298 | 136 |
| 6 min. | 167 | 297 | 292 | 370 | 338 | 102 |
| 7 min. | 217 | 353 | 340 | 435 | 386 | 164 |
| 8 min. | 271 | 398 | 391 | 501 | 440 | 227 |
| 9 min. | 335 | 446 | 458 | 581 | 521 | 282 |
| 10 min. | 371 | 485 | 520 | 649 | 596 | 327 |
| 11 min. | 409 | 527 | 582 | 716 | 671 | 368 |
| 12 min. | 454 | 574 | 636 | 769 | 746 | 422 |
| 13 min. | 508 | 641 | 691 | 802 | 817 | 466 |
| 14 min. | 569 | 710 | 741 | 853 | 875 | 519 |
| 15 min. | 602 | 754 | 780 | 915 | 939 | 579 |
| 16 min. | 638 | 770 | 805 | 970 | 983 | 630 |
| 17 min. | 666 | 796 | 822 | 1031 | 1012 | 673 |
| 18 min. | 700 | 809 | 835 | 1108 | 1051 | 711 |
| 19 min. | 726 | 823 | 845 | 1152 | 1101 | 754 |
| 20 min. | 732 | 834 | 849 | 1182 | 1121 | 807 |
| 21 min. | 736 | 843 | 851 | 1214 | 1137 | 864 |
| 22 min. | 736 | 848 | 853 | 1230 | 1150 | 923 |
| 23 min. | 736 | 853 | 853 | 1239 | 1155 | 979 |
| 24 min. | 736 | 855 | 853 | 1247 | 1157 | 1026 |
| 25 min. | 736 | 856 | 853 | 1254 | 1159 | 1067 |
| 26 min. | 736 | 856 | 853 | 1259 | 1161 | 1095 |
| 27 min. | 736 | 856 | 853 | 1263 | 1161 | 1095 |
| | | | | | | |
| R² | 0.99 | 0.98 | 0.98 | 0.99 | 0.99 | 0.99 |

### Example 3: Generation of H₂ vs. Time from SBH and 4.6% CoCl₂

Mixtures of SBH and NaOH were prepared, as listed in Table 3 below. Generation of hydrogen was performed as described in Example 1, except that 4.6 wt % CoCl₂ in water was added in place of aqueous malic acid. Volume of hydrogen gas evolved was noted at regular time intervals (in minutes) and correlated with time to determine linearity. The correlation coefficients, R², obtained from data from 1 minute to 20 minutes, also are listed for each material.

The results demonstrate that the method of this invention generates hydrogen with a good linear relationship between volume of aqueous solution added and the volume of hydrogen generated, as shown by the higher correlation coefficients in Table 2, relative to those in Table 3. The method also provides better capability for stopping hydrogen generation when flow of aqueous phase is stopped, as shown in Table 1.

**Table 3**

| | 5% NaOH | 15% NaOH | 25% NaOH | 100% SBH |
|---|---|---|---|---|
| 1 min. | 0 | 0 | 9 | 3 |
| 2 min. | 0 | 0 | 78 | 37 |
| 3 min. | 10 | 30 | 182 | 71 |
| 4 min. | 42 | 121 | 228 | 115 |
| 5 min. | 167 | 207 | 292 | 174 |
| 6 min. | 387 | 261 | 352 | 250 |
| 7 min. | 487 | 331 | 387 | 430 |
| 8 min. | 583 | 398 | 439 | 611 |
| 9 min. | 664 | 472 | 438 | 695 |
| 10 min. | 730 | 556 | 438 | 733 |
| 11 min. | 800 | 649 | 605 | 799 |
| 12 min. | 865 | 729 | 665 | 885 |
| 13 min. | 895 | 832 | 710 | 950 |
| 14 min. | 918 | 899 | 714 | 974 |
| 15 min. | 952 | 924 | 729 | 989 |
| 16 min. | 984 | 942 | 745 | 996 |
| 17 min. | 992 | 954 | 766 | 999 |
| 18 min. | 999 | 970 | 791 | 1003 |
| 19 min. | 1006 | 985 | 825 | 1006 |
| 20 min. | 1012 | 992 | 855 | 1008 |
| 21 min. | 1016 | 1001 | 875 | |
| 22 min. | 1018 | 1014 | 886 | |
| 23 min. | 1019 | 1030 | 894 | |
| 24 min. | 1022 | 1051 | 901 | |
| 25 min. | 1023 | 1085 | 906 | |
| 26 min. | 1023 | 1111 | 909 | |
| 27 min. | 1023 | 1132 | 911 | |
| 28 min. | 1023 | 1150 | 913 | |
| | | | | |
| | | | | |
| R² | 0.90 | 0.96 | 0.95 | 0.9 |

## Claims

1. A method for generation of hydrogen comprising:
(a) providing a solid composition comprising from 3% to 50% of at least one base; and 50% to 97% of at least one borohydride compound; and
(b) adding to the solid composition an aqueous solution of at least one acid; said aqueous solution comprising from 0.01 to 2 equivalents of acid;
wherein the solid composition and the aqueous solution are substantially free of transition metals from groups 8, 9 and 10 and
**characterised in that** the acid is malic acid.

2. The method of claim 1 in which said at least one borohydride compound is at least one alkali metal borohydride, and said at least one base is sodium, lithium or potassium hydroxide, sodium or potassium methoxide, or a combination thereof.

3. The method of claim 2 in which the solid composition comprises at least 5% of said at least one base and no more than 95% alkali metal borohydride.

4. The method of claim 3 in which said at least one alkali metal borohydride is sodium borohydride, potassium borohydride or a combination thereof.

5. The method of claim 4 in which the alkali metal borohydride is sodium borohydride and the base is sodium hydroxide.

6. The method of claim 1 in which the aqueous solution comprises from 0.1 to 1 molar equivalents of acid hydrogen ion for reaction with borohydride.

7. The method of claim 6 in which the solid composition comprises from 5% to 15% of sodium hydroxide and from 85% to 95% sodium borohydride.

## Patentansprüche

1. Verfahren zur Erzeugung von Wasserstoff, umfassend:
(a) das Bereitstellen einer festen Zusammensetzung, umfassend von 3% bis 50% von mindestens einer Base, und 50% bis 97% von mindestens einer Borhydridverbindung, und
(b) das Hinzufügen einer wäßrigen Lösung von mindestens einer Säure zu der festen Zusammensetzung, wobei die wäßrige Lösung von 0,01 bis 2 Äquivalente an Säure umfaßt,
wobei die feste Zusammensetzung und die wäßrige Lösung im wesentlichen frei von Übergangsmetallen der Gruppen 8, 9 und 10 sind,
und **dadurch gekennzeichnet, daß** die Säure Äpfelsäure ist.

2. Verfahren nach Anspruch 1, in welchem die mindestens eine Borhydridverbindung mindestens ein Alkalimetallborhydrid ist, und die mindestens eine Base Natrium-, Lithium- oder Kaliumhydroxid, Natrium- oder Kaliummethoxid oder eine Kombination davon ist.

3. Verfahren nach Anspruch 2, in welchem die feste Zusammensetzung mindestens 5% von der mindestens einen Base und nicht mehr als 95% Alkalimetallborhydrid umfaßt.

4. Verfahren nach Anspruch 3, in welchem das mindestens eine Alkalimetallborhydrid Natriumborhydrid, Kaliumborhydrid oder eine Kombination davon ist.

5. Verfahren nach Anspruch 4, in welchem das Alkalimetallborhydrid Natriumborhydrid ist, und die Base Natriumhydroxid ist.

6. Verfahren nach Anspruch 1, in welchem die wäßrige Lösung von 0,1 bis 1 Moläquivalente von Säurewasserstoffionen zur Reaktion mit Borhydrid umfaßt.

7. Verfahren nach Anspruch 6, in welchem die feste Zusammensetzung von 5% bis 15% an Natriumhydroxid und von 85% bis 95% Natriumborhydrid umfaßt.

## Revendications

1. Procédé de production d'hydrogène comprenant :
(a) la fourniture d'une composition solide comprenant de 3 % à 50 % d'au moins une base ; et de 50 % à 97 % d'au moins un composé de borohydrure ; et
(b) l'addition à la composition solide d'une solution aqueuse d'au moins un acide ; ladite solution aqueuse comprenant de 0,01 à 2 équivalents d'acide ;
dans lequel la composition solide et la solution aqueuse sont pratiquement exemptes de métaux de transition des groupes 8, 9 et 10 et
**caractérisé en ce que** l'acide est l'acide malique.

2. Procédé selon la revendication 1, dans lequel ledit au moins un composé de borohydrure est au moins un borohydrure de métal alcalin et ladite au moins une base est l'hydroxyde de sodium, de lithium ou de potassium, le méthoxyde de sodium ou de potassium ou une combinaison de ceux-ci.

3. Procédé selon la revendication 2, dans lequel la composition solide comprend au moins 5 % de ladite au moins une base et au plus 95 % de borohydrure de métal alcalin.

4. Procédé selon la revendication 3, dans lequel ledit au moins un borohydrure de métal alcalin est le borohydrure de sodium, le borohydrure de potassium ou une combinaison de ceux-ci.

5. Procédé selon la revendication 4, dans lequel le borohydrure de métal alcalin est le borohydrure de sodium et la base est l'hydroxyde de sodium.

6. Procédé selon la revendication 1, dans lequel la solution aqueuse comprend de 0,1 à 1 équivalent molaire d'ion hydrogène acide pour la réaction avec du borohydrure.

7. Procédé selon la revendication 6, dans lequel la composition solide comprend de 5 % à 15 % d'hydroxyde de sodium et de 85 % à 95 % de borohydrure de sodium.
